(19) Europäisches Patentamt / European Patent Office / Office européen des brevets

(11) **EP 2 026 332 A1**

(12) **DEMANDE DE BREVET EUROPEEN**

(43) Date de publication:
**18.02.2009 Bulletin 2009/08**

(51) Int Cl.:
*G10L 21/06* $^{(2006.01)}$   *G06T 15/70* $^{(2006.01)}$
*G10L 15/14* $^{(2006.01)}$

(21) Numéro de dépôt: **08161149.3**

(22) Date de dépôt: **25.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **14.08.2007  FR 0757063**

(71) Demandeur: **France Telecom**
**75015 Paris (FR)**

(72) Inventeurs:
• **Govokhina, Oxana,**
 **c/o France Telecom**
 **35700 Rennes (FR)**
• **Breton, Gaspard,**
 **c/o France Telecom - Hauts de Seine**
 **35760 Saint Gregoire (FR)**
• **Bailly, Gérard,**
 **c/o France Telecom - Hauts de Seine**
 **38320 Eybens (FR)**

(54) **Procédé de synthèse audiovisuelle de la parole et système correspondant**

(57)   L'invention concerne un système (S) de synthèse audiovisuelle de la parole à partir de modèles visuels de segments phonétiques, caractérisé en ce qu'il comporte un modèle de décalage (MD) entre des frontières visuelles desdits modèles visuels et des frontières audio associées auxdits segments phonétiques.

Fig.2

EP 2 026 332 A1

**Description**

La présente invention concerne de manière générale les domaines de l'informatique et des télécommunications, et plus précisément le domaine de la synthèse audiovisuelle de la parole.

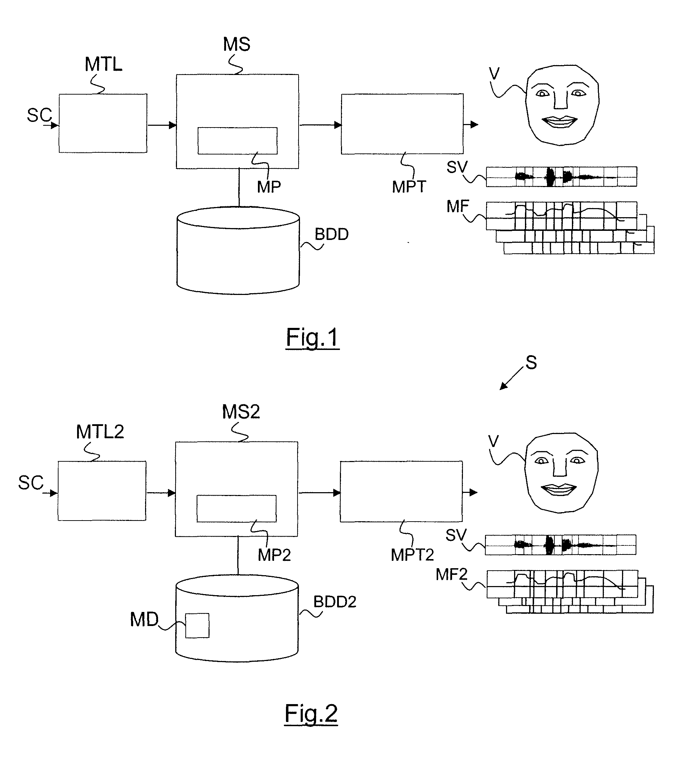

Les systèmes de synthèse audiovisuelle de la parole permettent d'animer les mouvements du visage d'un personnage virtuel ou d'une personne modélisée dans une vidéo, de façon coordonnée avec la synthèse de la voix du personnage virtuel ou de la personne modélisée. Un tel système, représenté à la **figure 1**, est formé d'une base de données BDD et de modules logiciels répartis dans un ou plusieurs ordinateurs. Il génère de la parole synthétique à partir d'une suite de caractères alphanumériques SC fournie en entrée d'un module MTL de traitements linguistiques.

Le module MTL effectue un prétraitement des éléments non lexicaux de la suite de caractères SC, tels que les dates, les nombres ou les abréviations. On obtient ainsi un texte prétraité, sur lequel le module MTL effectue une analyse morphologique et une analyse morphosyntaxique. Le module MTL fournit alors en sortie, à un module de synthèse MS, une transcription orthographique et phonétique du texte à synthétiser. Plus précisément, cette transcription est produite sous forme d'une chaîne de symboles phonétiques combinés à des indications portant sur la structure grammaticale du texte à synthétiser.

Le module de synthèse MS synthétise vocalement et visuellement la prononciation de la suite de caractères alphanumériques SC, à partir de la transcription phonétique fournie par le module de traitements linguistiques MTL, de modèles audiovisuels de segments phonétiques contenus dans la base de données BDD, et d'indications fournies par un module prosodique MP. La méthode la plus utilisée actuellement pour effectuer cette synthèse consiste à concaténer des modèles audiovisuels unitaires, ou unités audiovisuelles, à partir d'un dictionnaire, contenu par exemple dans la base de données BDD. Dans ce cas les unités sont sélectionnées par le module de synthèse en fonction de leurs caractéristiques, de manière à respecter au mieux les informations fournies par le module prosodique MP et le module de traitements linguistiques MTL.

Le module prosodique MP détermine, à partir de l'analyse effectuée par le module de traitements linguistiques MTL, des informations quant à la structure temporelle, spectrale et énergétique que doit avoir le signal sonore de sortie. Notamment, le module prosodique détermine les durées des phonèmes à synthétiser, à partir de modèles de durées des phonèmes. Ces modèles de durées se calculent en fonction de durées intrinsèques aux phonèmes et en fonction de facteurs dépendant du contexte. En effet les phonèmes, plus petites unités distinctives que l'on puisse isoler par segmentation dans une séquence parlée, sont susceptibles d'être prononcés de façon différente selon les locuteurs, leurs positions et leurs environnements au sein d'un mot. Un exemple de modélisation de durées de phonèmes suivant leur contexte est décrit dans l'article de B. Mobius et J. van Santen, intitulé "Modeling segmental duration in german text-to-speech synthesis" et publié en 1996.

Enfin le module de post-traitements MPT effectue un lissage ou un filtrage sur le signal fourni en sortie du module de synthèse MS.

Le module MPT fourni alors une synthèse vocale SV de la suite de caractères SC fournie en entrée du système, ainsi que des mouvements faciaux MF permettant d'animer un visage modélisé V.

Dans ces systèmes actuels de synthèse audiovisuelle, les repères de transition entre les mouvements faciaux associés à l'articulation de phonèmes sont calqués sur les frontières entre les allophones correspondants générés par synthèse vocale. On rappelle ici qu'un allophone est l'une des réalisations possibles d'un phonème. Le "r" roulé et le "r" non roulé sont par exemple deux allophones correspondant au phonème "r". Un exemple détaillé de système de synthèse audiovisuelle de la parole utilisant des "visemes", ou réalisations visuelles de phonèmes, synchronisées sur les durées des allophones correspondants, est décrit dans l'article "Audiovisual speech synthesis" de G. Bailly et publié en 2001.

Or les frontières du modèle visuel d'un segment phonétique ne devraient théoriquement pas être identiques aux frontières du modèle audio correspondant. En effet, plusieurs études ont montré que les mouvements faciaux anticipent souvent les caractéristiques phonétiques. Ces problèmes d'anticipation sont décrits par exemple dans les articles:

-    "Patterns of speech phasing. Their robustness in the production of a timed linguistic task: single versus double (abutted) consonants in French" de C. Abry, J.P. Orliaguet et R. Sock, publié en 1990 dans le journal "European Bulletin of Cognitive Psychology",
-    et "Temporal measures of anticipatory labial coarticulation for the vowel [u]: Within- and cross-subject variability", publié en 1992 dans le journal "The Journal of the Acoustical Society of America".

Ainsi certains mouvements articulatoires ne laissent peu ou pas de trace dans le son, tels que les mouvements préphonatoires, ou les mouvements d'anticipation des mouvements labiaux de prononciation d'occlusives.

De plus, comme décrit dans l'article "The importance of anticipatory coarticulation in the perception of ±round in Swedish front vowels: an investigation comparing natural speech with diphone synthesis ", de E.J. Eriksson et al.,

publié en 2002 à l'occasion d'une conférence internationale "Cognitive Science Conference", les gestes précèdent leurs conséquences acoustiques, dans le sens où l'on parvient à deviner un phonème qui va être prononcé par la façon dont on termine les phonèmes précédents.

L'alignement actuel des frontières de modèles visuels de segments phonétiques sur les frontières audio correspondantes ne reflète donc pas la réalité audiovisuelle du langage parlé. Or dans une communication faisant appel à un système de synthèse audiovisuelle de la parole, nous sommes particulièrement sensibles aux mouvements labiaux des locuteurs animés par ce système. Le fait de ne pas prendre en compte les phénomènes d'asynchronisme entre mouvements faciaux et allophones associés introduit un décalage gênant, qui détériore la qualité du système de synthèse audiovisuelle de la parole.

La présente invention a pour but de résoudre les inconvénients de la technique antérieure en fournissant un procédé et un système de synthèse audiovisuelle de la parole, qui modélise le décalage entre les frontières visuelles d'un modèle visuel de segment phonétique et des frontières audio correspondant à ce même segment phonétique, ces frontières audio étant par exemple issues d'un système de synthèse vocale classique.

A cette fin, l'invention propose un procédé de synthèse audiovisuelle de la parole, utilisant des modèles visuels de segments phonétiques, caractérisé en ce qu'il utilise un modèle de décalage de frontières visuelles desdits modèles visuels par rapport à des frontières audio associées auxdits segments phonétiques.

Grâce à l'invention, les segments phonétiques à synthétiser sont modélisés visuellement par des modèles dont les frontières sont décalées par rapport aux frontières des modèles audio correspondants, ce qui correspond à une prononciation plus naturelle. On augmente ainsi le réalisme des procédés de synthèse audiovisuelle de la parole. Par exemple les interlocuteurs physiques dans un dialogue homme-machine mettant en oeuvre l'invention auront une communication facilitée du fait de la diminution de l'incohérence perçue entre mouvements faciaux visualisés et allophones synthétisés par la machine.

De plus le procédé selon l'invention permet d'effectuer la synthèse audiovisuelle de la parole aussi rapidement que dans l'art antérieur: en effet le modèle de décalage est obtenu dans une phase préalable à l'utilisation du procédé de synthèse selon l'invention, de sorte qu'il n'induit pas de coût de calcul supplémentaire lors de la synthèse audiovisuelle en temps réel.

Selon une caractéristique préférée, ledit modèle de décalage est obtenu par apprentissage à partir de trajectoires de paramètres visuels correspondant à des suites de segments phonétiques.

Cette technique de modélisation des décalages entre modèles visuels et modèles audio de segments phonétiques, basée sur l'apprentissage, permet d'obtenir un modèle de décalage bien adapté à un type de locuteur donné ou à un contexte donné en fonction du corpus d'apprentissage utilisé.

Selon une caractéristique préférée, ledit apprentissage comporte les étapes suivantes:

- apprentissage de modèles visuels de segments phonétiques à partir d'une segmentation de trajectoires de paramètres visuels correspondant à des suites de segments phonétiques, ladite segmentation étant basée sur des modèles de durées audio desdits segments phonétiques,
- alignement desdits modèles visuels sur des trajectoires non segmentées de paramètres visuels correspondant à des suites de segments phonétiques et obtention d'une première segmentation visuelle desdites trajectoires non segmentées,
- calcul des décalages entre ladite segmentation basée sur des modèles de durées audio et ladite première segmentation visuelle,
- calcul d'un modèle moyen de décalage par segment phonétique considéré.

Les modèles moyens de décalage ainsi obtenus sont par exemple différents en fonction du contexte dans lequel sont prononcés les segments phonétiques associés, et forment un modèle de décalage global permettant de synthétiser des phrases de manière très réaliste.

Selon une autre caractéristique préférée, ledit apprentissage du modèle de décalage comporte les étapes supplémentaires de :

- réapprentissage de modèles visuels desdits segments phonétiques à partir de ladite première segmentation visuelle,
- alignement desdits modèles visuels réappris sur des trajectoires non segmentées de paramètres visuels correspondant à des suites de segments phonétiques et obtention d'une seconde segmentation visuelle,
- calcul des décalages entre ladite segmentation basée sur des modèles de durée audio et ladite seconde segmentation visuelle,
- calcul d'un modèle moyen de décalage par segment phonétique considéré,

ces étapes supplémentaires étant répétées cycliquement en remplaçant la première segmentation visuelle par la dernière segmentation visuelle obtenue, tant qu'un critère de stabilisation n'est pas rempli.

Ces étapes supplémentaires permettent d'optimiser le modèle de décalage obtenu par apprentissage. Ainsi lorsqu'entre deux segmentations visuelles successives obtenues la différence entre deux durées d'un même segment phonétique est inférieure à un seuil prédéterminé, très petit par rapport à la durée du segment phonétique, le modèle moyen de décalage associé se stabilise. Lorsque ce seuil est atteint pour tous les segments phonétiques modélisés, le modèle de décalage devient alors le plus réaliste et représentatif possible par rapport au corpus d'apprentissage.

Selon une autre caractéristique préférée, ladite étape d'apprentissage de modèles visuels utilise des modèles de Markov cachés desdites trajectoires de paramètres visuels correspondant auxdits segments phonétiques, et ladite étape d'alignement utilise l'algorithme de Viterbi pour faire correspondre lesdits modèles de Markov cachés auxdites trajectoires non segmentées.

Les techniques de modélisation par modèles de Markov cachés sont très performantes pour modéliser des segments de trajectoires observées et leur utilisation améliore donc le procédé selon l'invention lorsque les modèles visuels de segments phonétiques sont appris à partir de trajectoires de paramètres visuels.

Selon une autre caractéristique préférée, lesdits segments phonétiques sont des phonèmes, et un modèle moyen de décalage est calculé par phonème en contexte gauche, ou par phonème en contexte droit, ou par phonème en contexte gauche et droit.

Le fait de baser la synthèse audiovisuelle selon l'invention sur une analyse par phonèmes permet de l'intégrer facilement à des systèmes de synthèse audiovisuelle classiques, puisque ceux-ci sont basés sur une segmentation audio par phonèmes. De plus la prise en compte du contexte pour chaque phonème permet d'améliorer le réalisme de la synthèse.

Selon une autre caractéristique préférée, lesdites trajectoires de paramètres visuels sont représentatives de l'évolution de paramètres géométriques ou articulatoires, caractérisant le mouvement des lèvres, ou de la mâchoire, ou du larynx.

En utilisant des paramètres articulatoires ou géométriques, tels que l'ouverture des lèvres ou l'étirement des lèvres, pour modéliser les segments phonétiques, on obtient en sortie du système de synthèse audiovisuelle des trajectoires synthétisées permettant d'animer directement le maillage du visage d'un personnage virtuel.

L'invention concerne aussi un système de synthèse audiovisuelle de la parole à partir de modèles visuels de segments phonétiques, caractérisé en ce qu'il comporte un modèle de décalage entre des frontières visuelles desdits modèles visuels et des frontières audio associées auxdits segments phonétiques.

Ce système présente des avantages analogues à ceux du procédé de synthèse audiovisuelle selon l'invention.

L'invention concerne encore un programme d'ordinateur comportant des instructions de mise en oeuvre du procédé de synthèse audiovisuelle de la parole selon l'invention, lorsqu'il est exécuté sur un ordinateur.

D'autres caractéristiques et avantages apparaîtront à la lecture d'un mode de réalisation préféré décrit en référence aux figures dans lesquelles :

- la figure 1, déjà commentée en relation avec l'art antérieur, représente un système classique de synthèse audiovisuelle de la parole,
- la figure 2 représente un système mettant en oeuvre le procédé de synthèse audiovisuelle de la parole selon l'invention,
- la figure 3 représente des décalages de modèle visuels de segments phonétiques par rapport à des modèles audio de ces segments phonétiques,
- la figure 4 représente différentes phases du procédé de synthèse audiovisuelle de la parole selon l'invention,
- la figure 5 représente des paramètres géométriques caractérisant le mouvement des lèvres,
- la figure 6 représente un paramètre géométrique caractérisant la protrusion des lèvres,
- la figure 7 représente des étapes du procédé de synthèse audiovisuelle selon l'invention tel que décrit dans ce mode de réalisation,
- et la figure 8 représente un apprentissage de modèles visuels de segments phonétiques à partir de trajectoires de paramètres visuels et un alignement des modèles obtenus sur d'autres trajectoires.

Selon un mode préféré de réalisation de l'invention, on intègre le procédé de synthèse audiovisuelle de la parole selon l'invention dans un système de synthèse classique, tel que représenté à la **figure 1** et décrit précédemment. On obtient alors un système S de synthèse audiovisuelle de la parole selon l'invention, représenté à la **figure 2.**

Lorsque le système S reçoit en entrée la suite de caractères alphanumériques SC, celle-ci est tout d'abord traitée par un module MTL2 de traitements linguistiques, fonctionnant de manière identique au module MTL décrit précédemment en relation avec l'art antérieur. Il fournit notamment en sortie une transcription orthographique et phonétique du texte à synthétiser, à un module de synthèse MS2.

Le module de synthèse MS2 synthétise vocalement et visuellement la prononciation de la suite de caractères alphanumériques SC, à partir de la transcription phonétique fournie par le module de traitements linguistiques MTL2, de modèles audiovisuels de segments phonétiques contenus dans une base de données BDD2, d'indications fournies par un module prosodique MP2 et d'un modèle de décalage MD contenu également dans la base de données BDD2. Les modèles audiovisuels contenus dans la base de données BDD2 incluent au moins un modèle audio et un modèle visuel par segment phonétique en contexte droit. Autrement dit si l'on considère un segment phonétique à synthétiser, celui-ci est modélisé par différents modèles audio et visuels en fonction du segment phonétique prononcé à la suite de ce segment phonétique considéré.

Le module prosodique MP2 détermine, à partir des informations fournies par le module de traitements linguistiques MTL2, la durée audio de chaque segment phonétique à synthétiser. A chacun de ces segments phonétiques, le module de synthèse MS2 associe un modèle audio correspondant, présent dans la base de données BDD2.

Le module de synthèse MS2 associe également à chaque segment phonétique à synthétiser un modèle visuel, par exemple un modèle de Markov caché et un modèle de durées d'états permettant de synthétiser des trajectoires de paramètres visuels liés à la prononciation du segment phonétique. Ce modèle visuel est déterminé ou paramétré en fonction de la durée qu'il doit avoir, cette durée étant déterminée par le module de synthèse MS2, une fois déterminé le modèle audio associé au segment phonétique, grâce au modèle de décalage MD.

Le modèle de décalage MD spécifie en effet, pour un modèle audio de segment phonétique en contexte droit considéré dans la base de données BDD2, le décalage anticipatoire en millisecondes entre la fin d'un modèle visuel correspondant au segment phonétique considéré et la fin du modèle audio. Ce décalage anticipatoire est positif ou négatif suivant que les mouvements faciaux anticipent la prononciation du segment phonétique qui suit le segment phonétique considéré ou au contraire sont retardés par rapport à cette prononciation.

La détermination successive par le module de synthèse MS2 de deux décalages successifs correspondant à deux segments phonétiques qui se suivent permet de calculer la durée du modèle visuel correspondant au deuxième de ces segments phonétiques. Suivant les modèles visuels utilisés, la durée ainsi calculée est ajustée pour répondre aux contraintes de ces modèles. Par exemple si on modélise un segment phonétique visuellement par un modèle de Markov caché à trois états et un modèle de durées d'états associé, sa durée doit être au moins de 30 millisecondes, c'est-à-dire son nombre d'états multiplié par la durée d'une trame visuelle, qui est de 10 millisecondes.

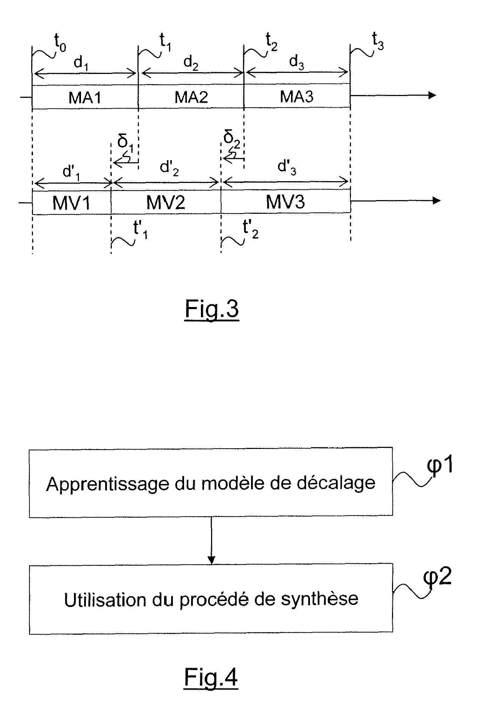

Le calcul des durées de modèles visuels de trois segments phonétiques qui se suivent est maintenant décrit à titre d'exemple en relation avec la **figure 3.** A ces trois segments phonétiques correspondent respectivement trois modèles audio MA1, MA2 et MA3, de durées respectives $d_1$, $d_2$ et $d_3$. Les durées des modèles audio utilisés dans ce mode de réalisation de l'invention sont supérieures à 30 millisecondes. De plus, les modèles audio MA1 et MA3 de début et de fin correspondent à un silence. La frontière de début $t_0$ du premier modèle audio MA1 et la frontière de fin $t_3$ du dernier modèle MA3 sont donc conventionnelles, et ne présentent pas de décalage avec la modélisation visuelle associée.

A ces trois modèles audio MA1, MA2 et MA3, correspondent respectivement trois modèles visuels MV1, MV2 et MV3. Le modèle de décalage MD fournit respectivement pour les modèles visuels MV1 et MV2 les décalages anticipatoires respectifs $\delta_1$ et $\delta_2$ par rapport aux modèles audio MA1 et MA2. Il est rappelé que ces décalages ont des valeurs en millisecondes positives ou négatives.

Le calcul des durées respectives $d'_1$, $d'_2$ et $d'_3$ des modèles visuels MV1, MV2 et MV3 a pour effet de générer de nouvelles frontières temporelles de synthèse de ces modèles visuels. La synthèse audio du modèle audio MA1 étant délimitée temporellement par les instants $t_0$ et $t_1$, la synthèse du modèle audio MA2 par $t_1$ et $t_2$, et la synthèse du modèle audio MA3 par $t_2$ et $t_3$, le calcul des durées $d'_1$, $d'_2$ et $d'_3$ détermine les nouvelles frontières $t_0$ et $t'_1$ du modèle visuel MV1, $t'_1$ et $t'_2$ du modèle visuel MV2, et $t'_2$ et $t_3$ du modèle visuel MV3. Il est à noter que les nouvelles frontières $t'_1$ et $t'_2$ ne coïncident pas forcément avec les décalages $\delta_1$ et $\delta_2$ étant donné la contrainte de durée minimale d'un modèle visuel, qui est de 30 millisecondes.

Le calcul de la durée $d'_1$ du modèle visuel MV1 et de sa nouvelle frontière de fin $t'_1$ exprimées en millisecondes s'effectue comme suit:

Si $\delta_1$ est positif, ce qui caractérise une anticipation des mouvements faciaux sur la parole, on calcule la valeur $d_1 - \delta_1$ en millisecondes. Si cette valeur est supérieure ou égale à trente millisecondes, alors:

$$d'_1 = d_1 - \delta_1 \text{ et } t'_1 = t_1 - \delta_1$$

Si $\delta_1$ est négatif, on calcule la valeur $d_2 + \delta_1$ en millisecondes. Si cette valeur est supérieure ou égale à trente millisecondes, alors:

$$d'_1 = d_1 - \delta_1 \text{ et } t'_1 = t_1 - \delta_1$$

De même le calcul de la durée d'$_2$ du modèle visuel MV2 et de sa nouvelle frontière de fin t'$_2$ exprimées en millisecondes s'effectue comme suit:

Si $\delta_2$ est positif, ce qui caractérise une anticipation des mouvements faciaux sur la parole, on calcule la valeur $t_2$ - t'$_1$- $\delta_2$ en millisecondes. Si cette valeur est supérieure ou égale à trente millisecondes, alors:

$$t'_2 = t_2 - \delta_2 \text{ et } d'_2 = t'_2 - t'_1$$

Si $\delta_2$ est négatif, on calcule la valeur $d_3 + \delta_2$ en millisecondes. Si cette valeur est supérieure ou égale à trente millisecondes, alors:

$$t'_2 = t_2 - \delta_2 \text{ et } d'_2 = t'_2 - t'_1$$

La frontière de fin $t_3$ du modèle visuel MV3 restant inchangée, on a:

$$d'_3 = t_3 - t'_2$$

Les durées des modèles visuels MV1, MV2 et MV3 ainsi calculées répondent à la contrainte d'une durée au moins égale à 30 millisecondes.

Une fois déterminées les durées des modèles visuels et audio de chacun des segments phonétiques, le modèle de synthèse MS2 concatène ces modèles pour former une phrase correspondant à la suite de caractères alphanumériques SC à synthétiser et envoie les modèles concaténés au module de post-traitements MPT2. Celui-ci effectue un lissage de cette concaténation et génère en sortie la synthèse vocale SV et des mouvements faciaux MF2 animant le visage modélisé V.

En variante, les modèles audiovisuels contenus dans la base de données BDD2 incluent au moins un modèle audio et un modèle visuel par segment phonétique en contexte gauche, et le modèle de décalage MD spécifie pour un modèle audio de segment phonétique en contexte gauche considéré dans la base de données BDD2, le décalage anticipatoire en millisecondes entre le début d'un modèle visuel correspondant au segment phonétique et le début de ce modèle audio.

Dans une autre variante, les modèles audiovisuels contenus dans la base de données BDD2 incluent au moins un modèle audio et un modèle visuel par segment phonétique en contexte gauche et droit. Le modèle de décalage MD fournit alors deux valeurs de décalage par modèle audio de segment phonétique, une valeur de décalage par rapport au début du modèle audio et une valeur de décalage par rapport à la fin du modèle audio.

De plus ces décalages sont spécifiés en millisecondes, mais il est également possible de les exprimer en d'autres unités ou de façon relative, par exemple en pourcentage de la durée du modèle audio considéré.

Le modèle de décalage MD utilisé par le système S de synthèse audiovisuelle de la parole, préalablement à son utilisation décrite précédemment, a été appris lors d'une phase d'apprentissage. Le procédé de synthèse audiovisuelle de la parole selon l'invention comporte en effet deux phases, représentées à la **figure 4:**

- une phase $\varphi1$ d'apprentissage du modèle de décalage MD, effectuée une seule fois, préalablement à l'utilisation du procédé de synthèse audiovisuelle selon l'invention,
- et une phase $\varphi2$ d'utilisation du modèle de décalage MD obtenu à l'issue de la phase $\varphi1$, par le procédé de synthèse audiovisuelle selon l'invention.

La phase $\varphi1$ d'apprentissage est par exemple implémentée dans un ordinateur, puis le modèle de décalage MD obtenu est stocké dans la base de données BDD2 du système S de synthèse audiovisuelle de la parole selon l'invention.

La phase $\varphi1$ d'apprentissage du modèle de décalage MD est maintenant décrite. Dans ce mode de réalisation, les segments phonétiques utilisés sont des phonèmes, mais il est possible d'utiliser des segments phonétiques plus longs tels que des syllabes par exemple. De plus on utilise un modèle audio par phonème en contexte droit, c'est-à-dire qu'un phonème a des modèles audio différents suivant le phonème qui le suit. Par exemple le phonème "a" a un modèle audio dans le mot "massue" distinct de son modèle audio dans le mot "fabrique". Ces modèles audio sont issus d'une modélisation par modèles de Markov cachés et sont contenus dans la base de données BDD2.

Cependant il est à noter que d'autres types de modèles audio plus ou moins complexes sont également utilisables, tels que plusieurs allophones en fonction du locuteur ou en fonction du contexte gauche par exemple.

A chacun des modèles audio de la base de données BDD2 correspond un modèle visuel élaboré par apprentissage. Le corpus d'apprentissage est construit à partir de phrases prononcées par un locuteur:

- On répartit sur le visage d'un locuteur un nombre important de marqueurs, collés sur des points du visage qui correspondent aux sommets d'un maillage modélisant le visage du locuteur.
- Puis on enregistre l'audio et la vidéo du locuteur à qui l'on fait prononcer environ 200 phrases d'apprentissage, avec trois caméras, une de face, une en contre-plongée et une de profil.
- On capture ensuite les positions des marqueurs sur les vidéos enregistrées, ce qui donne des trajectoires de coordonnées en trois dimensions des points caractéristiques du visage du locuteur.

A partir de ces trajectoires de points caractéristiques, on construit trois trajectoires pour chaque phrase prononcée, correspondant à des paramètres géométriques:

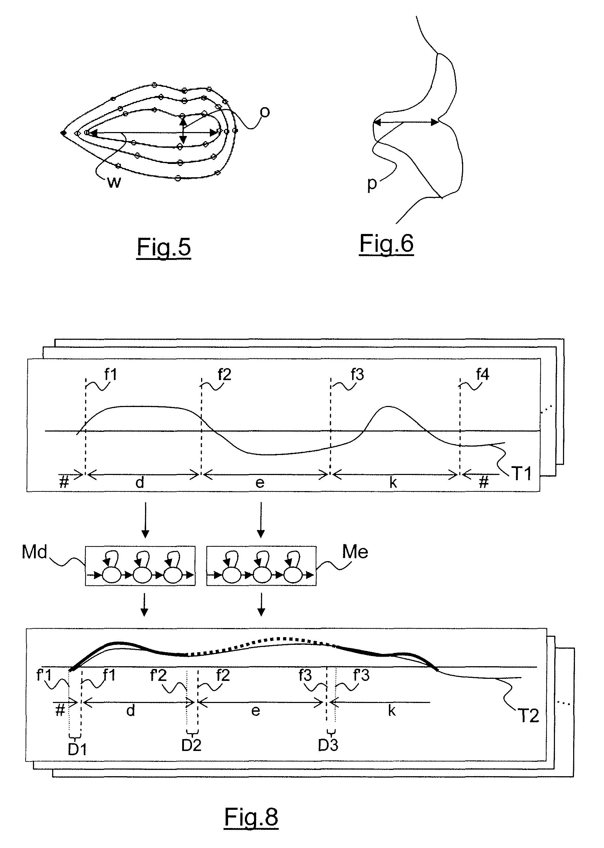

- Une trajectoire correspondant à l'ouverture et à la fermeture des lèvres, c'est-à-dire à l'évolution du paramètre o représenté à la **figure 5,**
- une trajectoire correspondant à l'étirement des lèvres, c'est-à-dire à l'évolution du paramètre w représenté à la **figure 5,**
- et une trajectoire correspondant à la protrusion des lèvres, caractérisant la prononciation de voyelles protrues telles que le "u" du mot "protrusion", et qui correspond à l'évolution du paramètre p représenté à la **figure 6.**

Sept autres trajectoires de paramètres articulatoires sont également calculées pour chaque phrase prononcée, ces paramètres articulatoires étant déterminés par une Analyse en Composantes Principales (ACP) des trajectoires initiales de points caractéristiques. Ces paramètres correspondent respectivement à:

- la montée et la descente de la mâchoire,
- l'arrondissement des lèvres,
- la montée et la descente de la lèvre inférieure,
- la montée et la descente de la lèvre supérieure,
- la montée et la descente des commissures des lèvres,
- l'avancée et la rétraction de la mâchoire,
- et la montée et la descente du larynx.

Pour chacune de ces trajectoires de paramètres géométriques ou articulatoires, dits "statiques", on détermine de plus leurs dérivées premières et secondes, ce qui forme des trajectoires supplémentaires de paramètres dits "dynamiques". Ces paramètres statiques et dynamiques sont dans la suite regroupés sous le terme "paramètres visuels".

Enfin une analyse audio des phrases prononcées permet d'obtenir, pour chaque phrase, une segmentation audio des trajectoires de paramètres visuels correspondantes. En effet chaque phrase prononcée correspond à une suite de phonèmes. Le modèle audio de chacun de ces phonèmes a une durée prédéfinie. En concaténant les modèles audio de chacun de ces phonèmes on obtient donc une suite de durées dont les frontières forment une segmentation audio, que l'on applique aux trajectoires des paramètres visuels de la phrase considérée.

Le corpus d'apprentissage comprend donc environ 200*30 trajectoires de paramètres visuels (statiques et dynamiques) ainsi que leurs découpages en phonèmes effectués par une segmentation basée sur des modèles de durées audio. Il est à noter que suivant la qualité des modèles visuels souhaités plus ou moins de trajectoires sont nécessaires dans le corpus, et plus ou moins de paramètres visuels statiques sont nécessaires pour modéliser un phonème.

De plus, dans ce mode de réalisation de l'invention, les paramètres visuels modélisant un segment phonétique sont issus de la modélisation en trois dimensions d'un visage parlant, mais d'autres types de paramètres visuels sont utilisables.

En variante on utilise des paramètres visuels correspondant à la modélisation en deux dimensions d'un visage parlant, c'est-à-dire à une séquence d'images. Dans ce cas, les caractéristiques visuelles à modéliser correspondent par exemple à des déplacements de certains pixels, tels que des pixels caractéristiques des lèvres. Une telle modélisation est décrite dans l'article "Trainable Videorealistic Speech Animation ", de T. Ezzat et al., publié à l'occasion d'un conférence internationale "Association for Computing Machinery /Special Interest Group on Computer Graphics and Interactive Techniques (ACM SIGGRAPH)" de juillet 2002. Il est également possible dans ce cas d'utiliser des caractéristiques visuelles issues d'une analyse statistique telle qu'une Analyse en Composantes Principales (ACP) ou une Analyse Discriminante Linéaire (ADL) appliquée à des images. Une telle technique est décrite dans l'article " Visual speech synthesis using statistical models of shape and appearance" de B. J. Theobald et al., publié à l'occasion d'une conférence internationale "Auditory-Visual Speech Processing" de 2001.

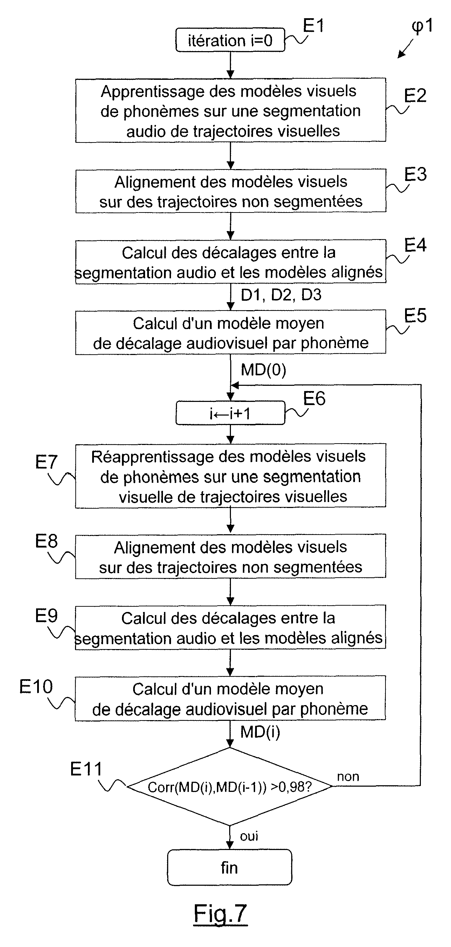

En référence à la **figure 7**, la phase d'apprentissage du modèle de décalage MD est représentée sous la forme d'un algorithme comportant des étapes E1 à E11.

L'étape E1 est l'initialisation d'une variable i d'itération, à la valeur zéro.

L'étape suivante E2 est l'apprentissage de modèles visuels de phonèmes à partir des trajectoires du corpus d'apprentissage découpées en phonèmes par une segmentation audio. Plus précisément on applique, sur les représentants de chaque phonème en contexte droit, un représentant étant formé de 30 segments de trajectoires de paramètres visuels statiques et dynamiques ayant la durée du modèle audio associé au phonème en contexte droit, l'algorithme de Baum-Welch. Un exemple d'apprentissage de modèles visuels de phonèmes basé sur cet algorithme est décrit dans l'article "TDA: a new trainable trajectory formation system for facial animation" de O. Govokhina et al.

On obtient en sortie un modèle de Markov caché à trois états gauche-droit, c'est-à-dire sans retour possible dans les états passés, pour chaque phonème en contexte droit. Un tel modèle de Markov caché est caractérisé par une matrice 3*3 de transition, c'est-à-dire de probabilités de passage d'un état à un autre, et d'une matrice d'observations, contenant les probabilités d'émission des observations dans chaque état, formée de trois multi-gaussiennes, c'est-à-dire une multi-gaussienne par état. Chaque multi-gaussienne est représentative d'une moyenne et d'une variance des observations par paramètre visuel, et est associée à un vecteur d'initialisation, ici [1 0 0].

Pour chaque modèle de Markov caché obtenu modélisant un phonème en contexte droit, on calcule le temps passé par chaque représentant de ce phonème en contexte droit dans chaque état du modèle de Markov caché. On obtient un modèle de durées d'états correspondant à une mono-gaussienne à trois paramètres.

La **figure 8** représente la construction de modèles de Markov cachés Md et Me pour respectivement le phonème d lorsqu'il est suivi du phonème e, c'est-à-dire le phonème d en contexte droit e, et le phonème e lorsqu'il est suivi du phonème k, c'est-à-dire le phonème e en contexte droit k, à partir des trajectoires de paramètres visuels contenant ces suites de phonèmes, dont la trajectoire T1. La trajectoire T1 représente l'évolution d'un paramètre visuel correspondant à la prononciation de la suite de phonèmes #, d, e, k et #, où # représente un silence. Le représentant du phonème d en contexte droit e est caractérisé par une frontière f1 de début et une frontière f2 de fin issues de la segmentation audio de la trajectoire T1. De même le représentant du phonème e en contexte droit k est limité par les frontières f2 et f3 et le représentant du phonème k en contexte droit # par les frontières f3 et f4, issues de cette segmentation audio.

A l'issue de cette étape E2, chaque phonème en contexte droit est modélisé par un modèle de Markov caché associé à un modèle de durées d'états. Ce modèle permet, étant donné des paramètres d'initialisation, correspondant par exemple aux valeurs des paramètres visuels statiques et dynamiques aux frontières de fin de trajectoires précédentes, de reconstituer des trajectoires réalistes pour le phonème en contexte droit considéré.

L'étape suivante E3 est l'alignement des modèles visuels obtenus à l'étape E2 sur des trajectoires non segmentées de paramètres visuels. On utilise par exemple pour cela des trajectoires du corpus d'apprentissage, mais sans la segmentation audio. De plus il suffit d'utiliser un représentant par phonème en contexte droit. Ainsi sur la **figure 8**, le modèle visuel du phonème d en contexte droit e est aligné sur trente trajectoires non segmentées, dont la trajectoire T2 correspondant à une phrase du corpus d'apprentissage. Cet alignement est non-forcé, c'est-à-dire qu'on n'impose pas de contrainte, dans le modèle de durées d'états associé au modèle de Markov caché Md, quant à la durée totale que doit avoir chaque segment de trajectoire reconstitué par le modèle visuel du phonème d en contexte droit e. De plus cet alignement utilise l'algorithme de Viterbi. Celui-ci fournit en sortie, étant donnée la durée totale de la phrase, les durées optimales des trajectoires reconstituées par les modèles visuels correspondant à la suite de phonèmes de la phrase, pour que ces trajectoires reconstituées aient le maximum de vraisemblance avec les trajectoires sur lesquelles on tente de les aligner.

On obtient ainsi, à la fin de l'étape E3, une première segmentation visuelle, grâce aux durées des trajectoires visuelles reconstituées obtenues par l'algorithme de Viterbi. Par exemple l'alignement des modèles visuels des phonèmes d en contexte droit e et e en contexte droit k fournit de nouvelles frontières de phonèmes sur la trajectoire T2, qui sont les frontières f1 et f2 pour le phonème d en contexte droit e et f2 et f3 pour le phonème e en contexte droit k.

L'étape suivante E4 est le calcul des décalages entre la première segmentation visuelle obtenue à l'étape E3 et une segmentation audio des trajectoires non segmentées utilisées pour obtenir la première segmentation visuelle. Ainsi sur la trajectoire T2 de la **figure 8,** on calcule les décalages suivants:

- le décalage D1 entre la frontière f1 de fin du phonème # en contexte droit d associée à une segmentation audio de la trajectoire T2, et la frontière f'1 de fin de la trajectoire reconstituée à l'étape E3 par le modèle visuel du phonème # en contexte droit d,
- le décalage D2 entre la frontière f2 de fin du phonème d en contexte droit e associée à une segmentation audio de la trajectoire T2, et la frontière f2 de fin de la trajectoire reconstituée à l'étape E3 par le modèle visuel du phonème d en contexte droit e,

- et le décalage D3 entre la frontière f3 de fin du phonème e en contexte droit k associée à une segmentation audio de la trajectoire T2, et la frontière f3 de fin de la trajectoire reconstituée à l'étape E3 par le modèle visuel du phonème e en contexte droit k.

L'étape suivante E5 est le calcul d'un modèle moyen de décalage par phonème en contexte droit. L'étape E3 d'alignement étant effectuée sur des trajectoires correspondant à plusieurs phrases, parmi lesquelles des phonèmes sont répétés avec le même contexte droit, plusieurs décalages sont calculés à l'étape E4 pour un même phonème en contexte droit. On effectue alors la moyenne de ces décalages pour n'obtenir qu'une valeur de décalage en millisecondes par phonème en contexte droit.

Ces valeurs de décalage forment un premier modèle de décalage intermédiaire MD(0). Ce modèle fournit donc pour chaque phonème en contexte droit, le décalage audiovisuel entre le modèle visuel et le modèle audio de ce phonème en contexte droit.

L'étape suivante E6 est l'incrémentation d'une unité de la variable i d'itération.

L'étape suivante E7 est le réapprentissage de modèles visuels de phonèmes en contexte droit à partir d'une segmentation visuelle de trajectoires de paramètres visuels issues du corpus d'apprentissage. Pour cela on utilise une segmentation audio de ces trajectoires et le modèle de décalage obtenu à la dernière itération de l'algorithme, soit le modèle MD(i-1). Par exemple sur la trajectoire T2 de la **figure 8,** la segmentation visuelle donnée par le modèle de décalage MD(0) et la segmentation audio de cette trajectoire est définie par les frontières visuelles f1, f2 et f3.

Dans cette étape E7, les modèles visuels de phonèmes en contexte droit sont réappris sur les trajectoires du corpus d'apprentissage segmentées selon cette segmentation visuelle modifiée, en utilisant l'algorithme de Baum-Welch, de façon similaire à l'étape E2, la seule différence étant qu'on utilise une autre segmentation qu'une segmentation basée sur des modèles de durées audio.

L'étape suivante E8 est l'alignement des modèles visuels obtenus à l'étape E7 sur des trajectoires non segmentées de paramètres visuels. Cet alignement utilise l'algorithme de Viterbi et s'effectue de la même manière qu'à l'étape E3. On obtient ainsi, à la fin de l'étape E8, une nouvelle segmentation visuelle, grâce aux durées optimales des segments de trajectoires reconstitués, obtenues par l'algorithme de Viterbi.

L'étape suivante E9 est le calcul des décalages entre la nouvelle segmentation visuelle de trajectoires de paramètres visuels, obtenue à l'étape E8, et une segmentation audio de ces trajectoires.

L'étape suivante E10 est le calcul d'un modèle moyen de décalage par phonème en contexte droit, chaque phonème en contexte droit étant représenté par des segments de trajectoires de paramètres visuels. Ce modèle moyen de décalage est calculé de manière similaire à celui de l'étape E5. Les modèles moyens de décalage obtenus pour tous les phonèmes en contexte droit forment le modèle de décalage intermédiaire MD(i).

L'étape E11 est la vérification d'un critère de stabilisation entre les deux derniers modèles de décalage successifs obtenus. Pour cela on calcule le coefficient de corrélation Corr(MD(i), MD(i-1)) défini comme suit:

$$Corr(MD(i), MD(i-1)) = \frac{\sum_{j=1}^{n}(x_j - \bar{x}) \cdot (y_j - \bar{y})}{\sqrt{\sum_{j=1}^{n}(x_j - \bar{x})^2} \cdot \sqrt{\sum_{j=1}^{n}(y_j - \bar{y})^2}}$$

où :

- n est le nombre de phonèmes en contexte droit modélisés,
- $x_j$ est le décalage en millisecondes donné par le modèle de décalage MD(i) pour le j-ième phonème en contexte droit parmi les n phonèmes en contexte droit modélisés,
- $y_j$ est le décalage en millisecondes donné par le modèle de décalage MD(i-1) pour le j-ième phonème en contexte droit parmi les n phonèmes en contexte droit modélisés,
- $\bar{x}$ est la moyenne des décalages du modèle de décalage MD(i), donnée par la formule:

$$\bar{x} = \frac{1}{n}\sum_{j=1}^{n} x_j$$

- et $\bar{y}$ est la moyenne des décalages du modèle de décalage MD(i-1), donnée par la formule:

$$\bar{y} = \frac{1}{n} \sum_{j=1}^{n} y_j$$

Plus le coefficient de corrélation Corr(MD(i), MD(i-1)) est proche de 1, plus les valeurs des modèles MD(i) et MD(i-1) sont corrélées. Lorsque le coefficient de corrélation ainsi calculé est supérieur à un seuil, égal par exemple à 0,98, alors on considère que le modèle MD(i) obtenu est stable et ce modèle MD(i) devient le modèle de décalage final MD utilisé par le procédé de synthèse audiovisuelle de la parole selon l'invention. Sinon on retourne à l'étape E6 pour déterminer un nouveau modèle de décalage, et les étapes E6 à E11 sont répétées jusqu'à ce que le modèle de décalage obtenu soit stable.

**Revendications**

1. Procédé de synthèse audiovisuelle de la parole, utilisant des modèles visuels de segments phonétiques, **caractérisé en ce qu'**il utilise un modèle de décalage (MD) de frontières visuelles desdits modèles visuels par rapport à des frontières audio associées auxdits segments phonétiques.

2. Procédé de synthèse audiovisuelle selon la revendication 1, **caractérisé en ce que** ledit modèle de décalage (MD) est obtenu par apprentissage à partir de trajectoires de paramètres visuels correspondant à des suites de segments phonétiques.

3. Procédé de synthèse audiovisuelle selon la revendication 2, **caractérisé en ce que** ledit apprentissage comporte les étapes suivantes:

   - apprentissage (E2) de modèles visuels de segments phonétiques à partir d'une segmentation de trajectoires de paramètres visuels correspondant à des suites de segments phonétiques, ladite segmentation étant basée sur des modèles de durées audio desdits segments phonétiques,
   - alignement (E3) desdits modèles visuels sur des trajectoires non segmentées de paramètres visuels correspondant à des suites de segments phonétiques et obtention d'une première segmentation visuelle desdites trajectoires non segmentées,
   - calcul (E4) des décalages entre ladite segmentation basée sur des modèles de durées audio et ladite première segmentation visuelle,
   - calcul (E5) d'un modèle moyen de décalage MD(0) par segment phonétique considéré.

4. Procédé de synthèse audiovisuelle selon la revendication 3, **caractérisé en ce que** ledit apprentissage du modèle de décalage comporte les étapes supplémentaires de :

   - réapprentissage (E7) de modèles visuels desdits segments phonétiques à partir de ladite première segmentation visuelle,
   - alignement (E8) desdits modèles visuels réappris sur des trajectoires non segmentées de paramètres visuels correspondant à des suites de segments phonétiques et obtention d'une seconde segmentation visuelle,
   - calcul (E9) des décalages entre ladite segmentation basée sur des modèles de durée audio et ladite seconde segmentation visuelle,
   - calcul (E10) d'un modèle moyen de décalage par segment phonétique considéré,

   ces étapes supplémentaires étant répétées cycliquement en remplaçant la première segmentation visuelle par la dernière segmentation visuelle obtenue, tant qu'un critère de stabilisation n'est pas rempli.

5. Procédé de synthèse audiovisuelle selon la revendication 3 ou 4, **caractérisé en ce que** ladite étape d'apprentissage (E2) de modèles visuels utilise des modèles de Markov cachés desdites trajectoires de paramètres visuels correspondant auxdits segments phonétiques, et **en ce que** ladite étape d'alignement (E3) utilise l'algorithme de Viterbi pour faire correspondre lesdits modèles de Markov cachés auxdites trajectoires non segmentées.

6. Procédé de synthèse audiovisuelle selon l'une quelconque des revendications 1 à 5, **caractérisé en ce que** lesdits segments phonétiques sont des phonèmes, et **en ce qu'**un modèle moyen de décalage est calculé par phonème en contexte gauche, ou par phonème en contexte droit, ou par phonème en contexte gauche et droit.

**7.** Procédé de synthèse audiovisuelle selon l'une quelconque des revendications 2 à 6, **caractérisé en ce que** lesdites trajectoires de paramètres visuels sont représentatives de l'évolution de paramètres géométriques ou articulatoires, caractérisant le mouvement des lèvres, ou de la mâchoire, ou du larynx.

**8.** Système (S) de synthèse audiovisuelle de la parole à partir de modèles visuels de segments phonétiques, **caractérisé en ce qu'**il comporte un modèle de décalage (MD) entre des frontières visuelles desdits modèles visuels et des frontières audio associées auxdits segments phonétiques.

**9.** Programme d'ordinateur comportant des instructions pour mettre en oeuvre le procédé de synthèse audiovisuelle de la parole selon l'une quelconque des revendications 1 à 7, lorsqu'il est exécuté sur un ordinateur.

Fig.1

Fig.2

$$t_0 \qquad t_1 \qquad t_2 \qquad t_3$$

| $d_1$ | $d_2$ | $d_3$ | |
|:-:|:-:|:-:|:-:|
| MA1 | MA2 | MA3 | ⟶ |

$$\delta_1 \qquad \delta_2$$

| $d'_1$ | $d'_2$ | $d'_3$ | |
|:-:|:-:|:-:|:-:|
| MV1 | MV2 | MV3 | ⟶ |

$$t'_1 \qquad t'_2$$

## Fig.3

| Apprentissage du modèle de décalage | φ1 |
|:-:|:-:|

↓

| Utilisation du procédé de synthèse | φ2 |
|:-:|:-:|

## Fig.4

Fig.5

Fig.6

Fig.8

itération i=0 — E1

φ1

Apprentissage des modèles visuels de phonèmes sur une segmentation audio de trajectoires visuelles — E2

Alignement des modèles visuels sur des trajectoires non segmentées — E3

Calcul des décalages entre la segmentation audio et les modèles alignés — E4

D1, D2, D3

Calcul d'un modèle moyen de décalage audiovisuel par phonème — E5

MD(0)

i←i+1 — E6

E7 — Réapprentissage des modèles visuels de phonèmes sur une segmentation visuelle de trajectoires visuelles

E8 — Alignement des modèles visuels sur des trajectoires non segmentées

E9 — Calcul des décalages entre la segmentation audio et les modèles alignés

E10 — Calcul d'un modèle moyen de décalage audiovisuel par phonème

MD(i)

E11 — Corr(MD(i),MD(i-1)) >0,98?

non

oui

fin

## Fig.7

Europäisches Patentamt
European Patent Office
Office européen des brevets

**RAPPORT DE RECHERCHE EUROPEENNE**

Numéro de la demande

EP 08 16 1149

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | XIE ET AL: "A coupled HMM approach to video-realistic speech animation" PATTERN RECOGNITION, ELSEVIER, GB, vol. 40, no. 8, 17 avril 2007 (2007-04-17), pages 2325-2340, XP022031755 ISSN: 0031-3203 * section 3.1.1 Asynchrony and synchrony * * abrégé * ----- | 1,2,6-9 | INV. G10L21/06 G06T15/70 ADD. G10L15/14 |
| D,A | O. GOVOKHINA, G. BAILLY, G. BRETON AND P. BAGSHAW: "TDA: A new trainable trajectory formation system for facial animation" INTERSPEECH 2006, [Online] 17 septembre 2006 (2006-09-17), - 21 septembre 2006 (2006-09-21) XP002463717 Pittsburgh, PA, USA Extrait de l'Internet: URL:http://www.icp.inpg.fr/ICP/publis/synt hese/_og/og_IS06.pdf> [extrait le 2008-01-08] * le document en entier * ----- | 1-9 | |
| P,X | O. GOVOKHINA, G. BAILLY, G. BRETON: "Learning Optimal Audiovisual Phasing for an HMM-based Control Model for facial animation" TH ISCA WORKSHOP ON SPEECH SYNTHESIS, [Online] 22 août 2007 (2007-08-22), - 24 août 2007 (2007-08-24) XP002463718 Bonn, DE Extrait de l'Internet: URL:http://www.icp.inpg.fr/ICP/publis/synt hese/_og/og_SSW07.pdf> [extrait le 2008-01-08] * le document en entier * ----- | 1-9 | DOMAINES TECHNIQUES RECHERCHES (IPC) G10L G06T |

Le présent rapport a été établi pour toutes les revendications

| Lieu de la recherche | Date d'achèvement de la recherche | Examinateur |
|---|---|---|
| La Haye | 4 novembre 2008 | Quélavoine, Régis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. MOBIUS ; J. VAN SANTEN.** *Modeling segmental duration in german text-to-speech synthesis,* 1996
- **C. ABRY ; J.P. ORLIAGUET ; R. SOCK.** Patterns of speech phasing. Their robustness in the production of a timed linguistic task: single versus double (abutted) consonants in French. *European Bulletin of Cognitive Psychology,* 1990
- Temporal measures of anticipatory labial coarticulation for the vowel [u]: Within- and cross-subject variability. *The Journal of the Acoustical Society of America,* 1992

- **E.J. ERIKSSON et al.** The importance of anticipatory coarticulation in the perception of ±round in Swedish front vowels: an investigation comparing natural speech with diphone synthesis. *Cognitive Science Conference,* 2002
- **B. J. THEOBALD et al.** Visual speech synthesis using statistical models of shape and appearance. *Auditory-Visual Speech Processing,* 2001